# EUROPEAN PATENT APPLICATION

(11) **EP 4 418 190 A1**
(43) Date of publication of application: **21.08.2024**
(21) Application number: 21960567.2
(22) Date of filing: 12.10.2021
(51) Int. Cl.: G06Q 30/06, G06Q 50/10

(54) **SUPPORT METHOD AND SUPPORT PROGRAM**

(71) Applicant: Japan Tobacco, Inc., Tokyo, 105-6927 (JP)
(72) Inventor: YAMAMOTO Yuka, Tokyo 130-8603 (JP)
(74) Representative: Hoffmann Eitle
(86) International application number: PCT/JP2021/037663
(87) International publication number: WO 2023/062708

(57) **Abstract**

Provided are a support method and a support program. A processor of electronic equipment 30 performs: a first step (step S 1) for requesting input of information (preference information) for specifying a user's preferred flavor and taste of an aerosol-forming substance; a second step (step S2) for, on the basis of the input information, determining a first category, which is the category most preferred by the user among a plurality of categories (regular, menthol, flavor) for aerosol-forming substances 11 that can be used in an aerosol generation device 10; and a third step (step S3) for selecting an aerosol-forming substance 11 of a second category from among the plurality of categories other than the first category, and producing an output to promote trial use of the selected aerosol-forming substance 11.

## Description

### TECHNICAL FIELD

The present invention relates to a support method and a support program.

### BACKGROUND ART

Patent Literature 1 discloses a method of determining a taste preference for food in consideration of a salt concentration.

### CITATION LIST

### PATENT LITERATURE

Patent Literature 1: Japanese Patent Application Laid-Open Publication No. 2021-60990

### SUMMARY OF INVENTION

### TECHNICAL PROBLEM

An aerosol generation device that is capable of inhaling aerosol having a smoke flavor is well-known. There are various smoke flavors of aerosol that can be inhaled using the aerosol generation device. The smoke flavor is a concept that includes either or both of smoke taste and flavor. The smoke taste is a general term for stimulation to a throat and lungs and senses of taste and smell that are perceived by inhaling an ingredient generated when tobacco leaves are heated. The flavor is a general term for the senses of taste and smell that are perceived by inhaling an ingredient of an additive added to the tobacco leaves. In the following, the stimulation in the smoke taste is defined as a sensation of tobacco. The senses of taste and smell (such as a sensation of coolness or a sensation of exhilaration) that are perceived by inhaling menthol as an additive are collectively defined as a sensation of menthol. A sensation of flavor is defined as the sense of smell (aroma) that is perceived by inhaling a fragrance as an additive.

A user of the aerosol generation device selects and uses an aerosol former according to a personal preference. However, the aerosol former to be used may be determined depending on a usage environment and previous usage experience, and there is a possibility that an aerosol former that is really suitable for the user is not selected from various aerosol formers.

An object of the present invention is to provide a support method and a support program that support a discovery of an aerosol former that suits a preference of a user.

### SOLUTION TO PROBLEM

A support method according to one aspect of the present invention relates to a support method that supports a discovery of an aerosol former that suits a preference of a user of an aerosol generation device, the support method including: a first step of requesting input of information for specifying a smoke flavor of the aerosol former preferred by the user; a second step of determining, based on the input information, a first category that is a category most preferred by the user among a plurality of categories of aerosol formers usable with the aerosol generation device; and a third step of selecting an aerosol former of a second category other than the first category among the plurality of categories, and performing output to prompt a trial use of the selected aerosol former.

A support program according to one aspect of the present invention relates to a support program that supports a discovery of an aerosol former that suits a preference of a user of an aerosol generation device, the support program causing a processor to execute: a first step of requesting input of information for specifying a smoke flavor of the aerosol former preferred by the user; a second step of determining, based on the input information, a first category that is a category most preferred by the user among a plurality of categories of aerosol formers usable with the aerosol generation device; and a third step of selecting an aerosol former of a second category other than the first category among the plurality of categories, and performing output to prompt a trial use of the selected aerosol former.

### ADVANTAGEOUS EFFECTS OF INVENTION

According to the present invention, a support method and a support program that support a discovery of an aerosol former that suits a preference of a user can be provided.

### BRIEF DESCRIPTION OF DRAWINGS

FIG. 1 is a schematic diagram showing a schematic configuration of a support system 1.
FIG. 2 is a schematic diagram schematically showing a first configuration example of an aerosol generation device 10.
FIG. 3 is a schematic diagram schematically showing a second configuration example of the aerosol generation device 10.
FIG. 4 is a diagram showing an example of a list of aerosol formers 11 included in a sample set 20.
FIG. 5 is a flowchart for illustrating an operation of a processor of an electronic device 30.
FIG. 6 is a flowchart for illustrating an operation of the processor of the electronic device 30.
FIG. 7 is a diagram showing an example of a screen displayed on a display device of the electronic device 30.
FIG. 8 is a diagram showing an example of a screen displayed on the display device of the electronic device 30.
FIG. 9 is a diagram showing an example of a screen displayed on the display device of the electronic device 30.

### DESCRIPTION OF EMBODIMENTS

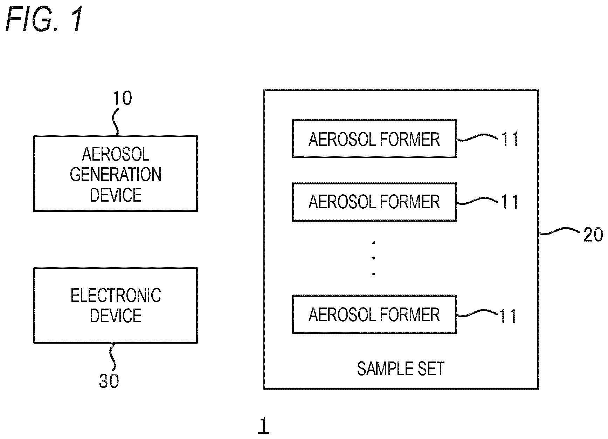

FIG. 1 is a schematic diagram showing a schematic configuration of a support system 1. The support system 1 is a system that supports discovering an aerosol former that suits a preference of a user of an aerosol generation device 10 by having the user try an aerosol former that has not been used by the user yet. The support system 1 includes the aerosol generation device 10 held by the user, an electronic device 30 including a display device, such as a smartphone, a tablet terminal, or a personal computer, and a sample set 20 provided to the user by a system administrator.

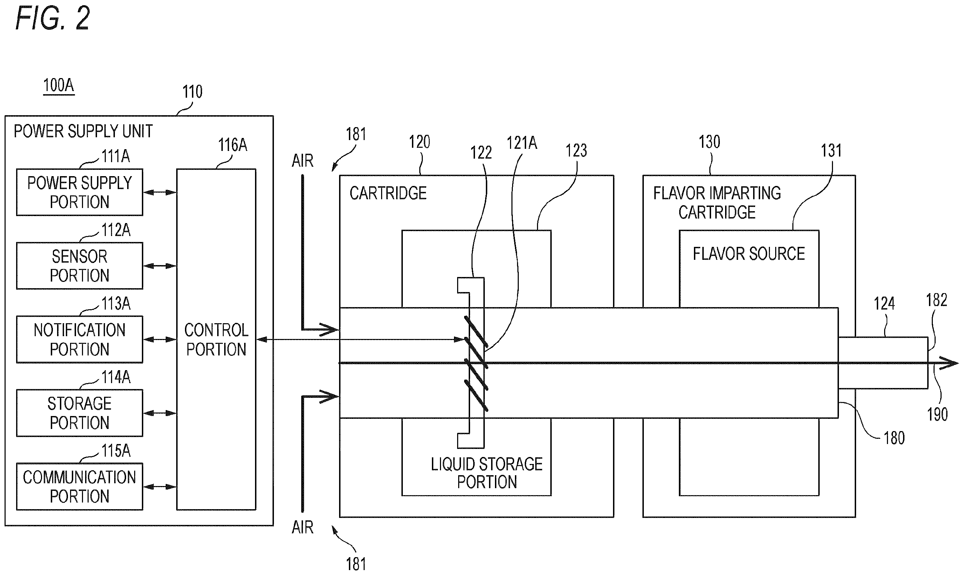

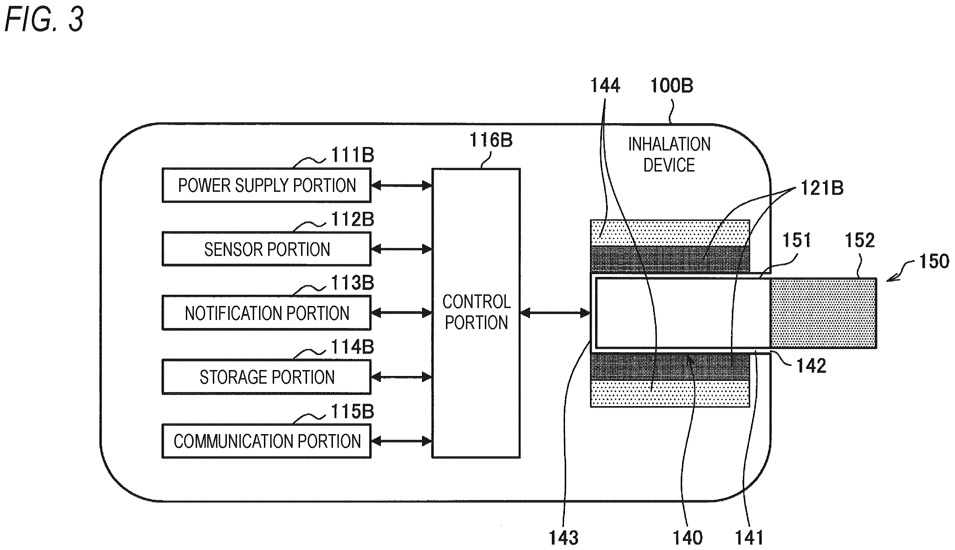

The aerosol generation device 10 is a device that consumes electric power to atomize an aerosol source contained in an attached aerosol former to generate aerosol, and makes the generated aerosol inhalable. The aerosol generation device 10 can be equipped with a plurality of types of aerosol formers. Although a configuration of the aerosol generation device 10 includes various configurations and is not particularly limited, a typical configuration example of the aerosol generation device 10 will be described below with reference to FIGS. 2 and 3.

FIG. 2 is a schematic diagram schematically showing a first configuration example of the aerosol generation device 10. An aerosol generation device 100A shown in FIG. 2 includes a power supply unit 110, a cartridge 120, and a flavor imparting cartridge 130. The power supply unit 110 includes a power supply portion 111A, a sensor portion 112A, a notification portion 113A, a storage portion 114A, a communication portion 115A, and a control portion 116A. The cartridge 120 includes a heating portion 121A, a liquid guiding portion 122, and a liquid storage portion 123. The flavor imparting cartridge 130 includes a flavor source 131 and a mouthpiece 124. An air flow path 180 is formed in the cartridge 120 and the flavor imparting cartridge 130.

The power supply portion 111A stores electric power. The power supply portion 111A supplies electric power to each constituent component of the aerosol generation device 100A under the control of the control portion 116A. The power supply portion 111A may be implemented by, for example, a rechargeable battery such as a lithium ion secondary battery.

The sensor portion 112A acquires various kinds of information regarding the aerosol generation device 100A. As an example, the sensor portion 112A is implemented by a pressure sensor such as a condenser microphone, a flow rate sensor, a temperature sensor, or the like, and acquires a value associated with inhalation by the user. As another example, the sensor portion 112A is implemented by an input device that receives information input from the user, such as a button or a switch.

The notification portion 113A notifies the user of information. The notification portion 113A includes, for example, a light emitting device that emits light, a display device that displays an image, a sound output device that outputs sound, a vibration device that vibrates, or the like.

The storage portion 114A stores various kinds of information for an operation of the aerosol generation device 100A. The storage portion 114A is implemented by, for example, a nonvolatile storage medium such as a flash memory.

The communication portion 115A is a communication interface that can perform communication in accordance with any wired or wireless communication standard. As such a communication standard, for example, Wi-Fi (registered trademark) or Bluetooth (registered trademark) may be adopted.

The control portion 116A functions as an arithmetic processing device and a control device, and controls overall operations in the aerosol generation device 100A according to various programs. The control portion 116A is implemented by, for example, an electronic circuit such as a central processing unit (CPU) or a microprocessor.

The liquid storage portion 123 stores the aerosol source. The aerosol source is atomized to generate the aerosol. The aerosol source is, for example, a liquid such as water or a polyhydric alcohol such as glycerin and propylene glycol. The aerosol source may include a flavor ingredient derived from tobacco or non-tobacco.

The liquid guiding portion 122 guides, from the liquid storage portion 123, the aerosol source, which is a liquid stored in the liquid storage portion 123, and holds the aerosol source. The liquid guiding portion 122 is, for example, a wick formed by twisting a fiber material such as glass fiber or a porous material such as porous ceramic. In that case, the aerosol source stored in the liquid storage portion 123 is guided by a capillary effect of the wick.

The heating portion 121A heats the aerosol source to atomize the aerosol source to generate the aerosol. In the example shown in FIG. 2, the heating portion 121A is implemented by a coil and is wound around the liquid guiding portion 122. If the heating portion 121A generates heat, the aerosol source held in the liquid guiding portion 122 is heated and atomized, and the aerosol is generated. The heating portion 121A generates heat when supplied with electric power from the power supply portion 111A. As an example, electric power may be supplied when the sensor portion 112A detects that the user starts inhalation and/or that predetermined information is input. When the sensor portion 112A detects that the user finishes inhalation and/or that the predetermined information is input, the supply of electric power may be stopped.

The flavor source 131 is a constituent component for imparting a flavor ingredient to the aerosol. The flavor source 131 may include the flavor ingredient derived from tobacco or non-tobacco (derived from an additive such as menthol or a fragrance).

The air flow path 180 is a flow path for air inhaled by the user. The air flow path 180 has a tubular structure in which an air inlet hole 181 that is an inlet of air into the air flow path 180 and an air outlet hole 182 that is an outlet of air from the air flow path 180 are set as both ends. In the middle of the air flow path 180, the liquid guiding portion 122 is disposed on an upstream side (side closer to the air inlet hole 181), and the flavor source 131 is disposed on a downstream side (side closer to the air outlet hole 182). Air flowing from the air inlet hole 181 as a result of inhalation by the user is mixed with the aerosol generated by the heating portion 121A, and is transported to the air outlet hole 182 through the flavor source 131 as shown by an arrow 190. When the mixed fluid of the aerosol and air passes through the flavor source 131, the flavor ingredient contained in the flavor source 131 is imparted to the aerosol.

The mouthpiece 124 is a member that is held in the mouth of the user during inhalation. The air outlet hole 182 is disposed in the mouthpiece 124. The user can take the mixed fluid of aerosol and air into the oral cavity by holding and inhaling the mouthpiece 124 in the mouth.

The configuration example of the aerosol generation device 100A has been described above. It is needless to say that the configuration of the aerosol generation device 100A is not limited to the above, and may take various configurations as exemplified below. As an example, the aerosol generation device 100A may not include the flavor imparting cartridge 130. In that case, the cartridge 120 is provided with the mouthpiece 124. As another example, the aerosol generation device 100A may include a plurality of types of aerosol sources. Other types of the aerosol may be generated by mixing the plurality of types of aerosol generated from the plurality of types of aerosol sources in the air flow path 180 and causing a chemical reaction. A method for atomizing the aerosol source is not limited to heating by the heating portion 121A. For example, the method of atomizing the aerosol source may be vibratory atomization or induction heating.

In the aerosol generation device 100A shown in FIG. 2, the cartridge 120 and the flavor imparting cartridge 130 (if the flavor imparting cartridge 130 is omitted, only the cartridge 120) constitute the aerosol former.

### (2) Second Configuration Example

FIG. 3 is a schematic diagram schematically showing a second configuration example of the aerosol generation device 10. An aerosol generation device 100B shown in FIG. 3 includes a power supply portion 111B, a sensor portion 112B, a notification portion 113B, a storage portion 114B, a communication portion 115B, a control portion 116B, a heating portion 121B, a holding portion 140, and a heat insulating portion 144.

The power supply portion 111B, the sensor portion 112B, the notification portion 113B, the storage portion 114B, the communication portion 115B, and the control portion 116B are substantially the same as the respective corresponding constituent components included in the aerosol generation device 100A of the first configuration example.

The holding portion 140 has an internal space 141, and holds a stick-type base material 150 while accommodating a part of the stick-type base material 150 in the internal space 141. The holding portion 140 has an opening 142 through which the internal space 141 communicates with the outside, and holds the stick-type base material 150 inserted into the internal space 141 from the opening 142. For example, the holding portion 140 is a cylindrical body having the opening 142 and a bottom portion 143 as a bottom surface, and defines the columnar internal space 141. The holding portion 140 also has a function of defining a flow path of air supplied to the stick-type base material 150. An air inlet hole, which is an inlet of air to the flow path, is disposed, for example, in the bottom portion 143. On the other hand, an air outlet hole, which is an outlet of air from the flow path, is the opening 142.

The stick-type base material 150 includes a base material portion 151 and an inhalation port portion 152. The base material portion 151 includes an aerosol source. The base material portion 151 may further include a flavor source. In this configuration example, the aerosol source is not limited to a liquid, and may be a solid. In a state where the stick-type base material 150 is held by the holding portion 140, at least a part of the base material portion 151 is accommodated in the internal space 141, and at least a part of the inhalation port portion 152 protrudes from the opening 142. When the user holds the inhalation port portion 152 protruding from the opening 142 in the mouth and inhales, air flows into the internal space 141 from the air inlet hole (not shown), and reaches the mouth of the user together with the aerosol generated from the base material portion 151.

In the example shown in FIG. 3, the heating portion 121B is formed in a film shape, and is disposed to cover an outer periphery of the holding portion 140. When the heating portion 121B generates heat, the base material portion 151 of the stick-type base material 150 is heated from the outer periphery, and aerosol is generated.

The heat insulating portion 144 prevents heat transfer from the heating portion 121B to other constituent components. For example, the heat insulating portion 144 is made of a vacuum heat insulating material or an aerogel heat insulating material.

The configuration example of the aerosol generation device 100B has been described above. It is needless to say that the configuration of the aerosol generation device 100B is not limited to the above, and may take various configurations as exemplified below. As an example, the heating portion 121B may be formed in a blade shape and disposed to protrude from the bottom portion 143 of the holding portion 140 into the internal space 141. In this case, the blade-shaped heating portion 121B is inserted into the base material portion 151 of the stick-type base material 150, and heats the base material portion 151 of the stick-type base material 150 from the inside. As another example, the heating portion 121B may be disposed to cover the bottom portion 143 of the holding portion 140. The heating portion 121B may be implemented by a combination of two or more of a first heating portion covering the outer periphery of the holding portion 140, a blade-shaped second heating portion, and a third heating portion covering the bottom portion 143 of the holding portion 140.

As another example, the holding portion 140 may include an opening and closing mechanism such as a hinge that opens and closes a part of an outer shell forming the internal space 141. The holding portion 140 may open and close the outer shell to sandwich and hold the stick-type base material 150 inserted into the internal space 141. In that case, the heating portion 121B may be provided at a sandwiching and holding place in the holding portion 140 and heat the stick-type base material 150 while pressing the stick-type base material 150. The method for atomizing the aerosol source is not limited to heating by the heating portion 121B. For example, the method for atomizing the aerosol source may be induction heating.

The aerosol generation device 100B may further include the heating portion 121A, the liquid guiding portion 122, the liquid storage portion 123, and the air flow path 180 according to the first configuration example, and the air outlet hole 182 of the air flow path 180 may also serve as the air inlet hole through which air flows into the internal space 141. In this case, the mixed fluid of the aerosol and air generated by the heating portion 121A flows into the internal space 141, is further mixed with the aerosol generated by the heating portion 121B, and reaches the oral cavity of the user.

In the aerosol generation device 100B shown in FIG. 3, the stick-type base material 150 constitutes an aerosol former.

A predetermined application program (support program) provided by a system administrator is installed in the electronic device 30 shown in FIG. 1. The electronic device 30 includes a processor such as a CPU and a memory, and the processor executes the application program to support discovering the aerosol former that suits a preference of the user.

The sample set 20 includes a plurality of types of aerosol formers 11 that can be used in the aerosol generation device 10, and is mailed to, for example, the home of the user. The user provides, in advance, the system administrator with information about the aerosol former that has been used by the system administrator. In accordance with the information, the system administrator creates the sample set 20 including a plurality of types of aerosol formers 11 that have never been used by the user, and provides the sample set 20 to the user. Here, it is assumed that the user tries the aerosol former 11 at home; but it is also assumed that the sample set 20 is provided to the user at a store, and the user tries the aerosol former 11 at the store.

A smoke flavor of each aerosol former 11 included in the sample set 20 is evaluated in advance by a sensory evaluation, and is defined by a combination of at least information indicating an intensity of the sensation of tobacco, information indicating an intensity of the sensation of menthol, and information indicating an intensity of the sensation of flavor. In the following description, it is assumed that the information indicating the intensities of the sensation of tobacco, the sensation of menthol, and the sensation of flavor is a numerical value (evaluation value) indicating a level of the intensity in a nine-level evaluation. This evaluation value indicates that the larger the value, the stronger the corresponding sensation can be obtained. For example, a smoke flavor with an evaluation value of "1" for the sensation of tobacco indicates a smoke flavor with a very weak sensation of tobacco. In addition, a smoke flavor with an evaluation value of "9" for the sensation of tobacco indicates a smoke flavor with a very strong sensation of tobacco.

The plurality of types of aerosol formers 11 included in the sample set 20 are divided into a plurality of categories according to the smoke flavors. In the following, an example will be described in which the plurality of categories are three categories: regular, menthol, and flavor. The aerosol former 11 belonging to the menthol category corresponds to one in which an additive such as menthol is added to the aerosol former 11, belonging to the regular category, to give a sensation of exhilaration. The aerosol former 11 belonging to the flavor category corresponds to one in which an additive such as a fragrance is added to the aerosol former 11, belonging to the menthol category, to give smell.

The regular category is a category to which the aerosol former 11 having the highest evaluation value for the sensation of tobacco among the sensation of tobacco, the sensation of menthol, and the sensation of flavor belongs. The menthol category is a category to which the aerosol former 11 having the highest evaluation value for the sensation of menthol among the sensation of tobacco, the sensation of menthol, and the sensation of flavor belongs. The flavor category is a category to which the aerosol former 11 having the highest evaluation value for the sensation of flavor among the sensation of tobacco, the sensation of menthol, and the sensation of flavor belongs. In the following, the regular category is defined as a category corresponding to the sensation of tobacco. The menthol category is defined as a category corresponding to the sensation of menthol. The flavor category is defined as a category corresponding to the sensation of flavor.

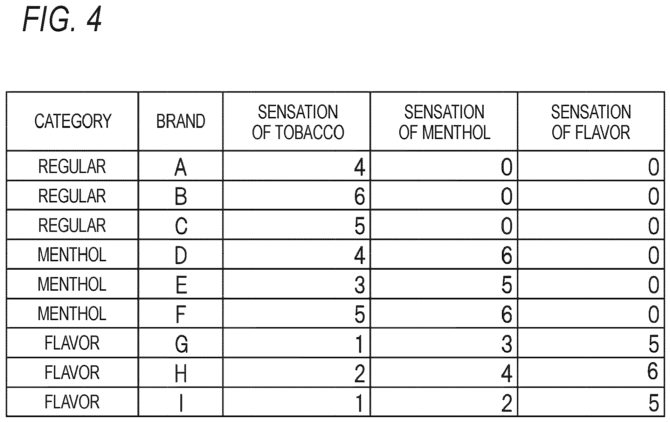

FIG. 4 is a diagram showing an example of a list of the aerosol formers 11 included in the sample set 20. FIG. 4 shows nine aerosol formers 11 of brands A to I. In items of the sensation of tobacco, the sensation of menthol, and the sensation of flavor corresponding to the respective brands, evaluation values of the respective sensations are shown. For example, the brand A is the aerosol former 11 having a smoke flavor with an evaluation value of "4" for the sensation of tobacco and evaluation values of "0" for the sensation of menthol and the sensation of flavor. In the example of FIG. 4, the aerosol formers 11 of the brand A, the brand B, and the brand C belong to the regular category. The aerosol formers 11 of the brand D, the brand E, and the brand F belong to the menthol category. The aerosol formers 11 of the brand G, the brand H, and the brand I belong to the flavor category.

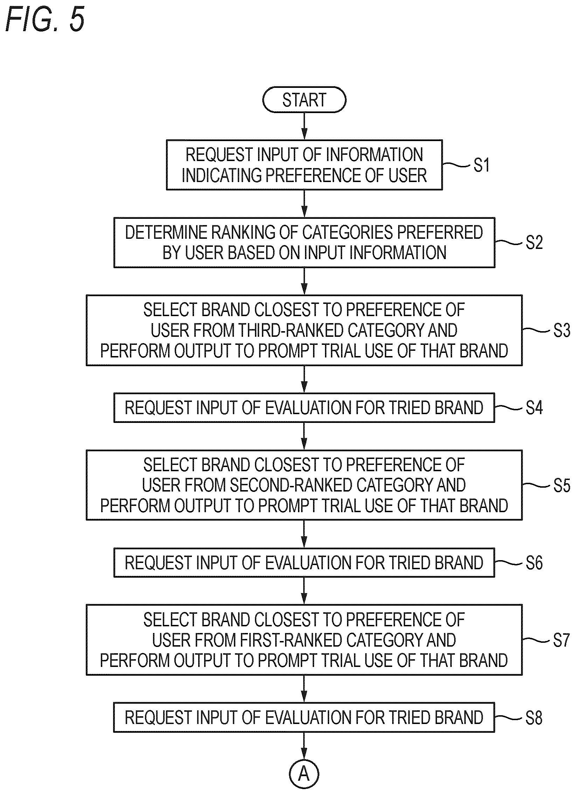

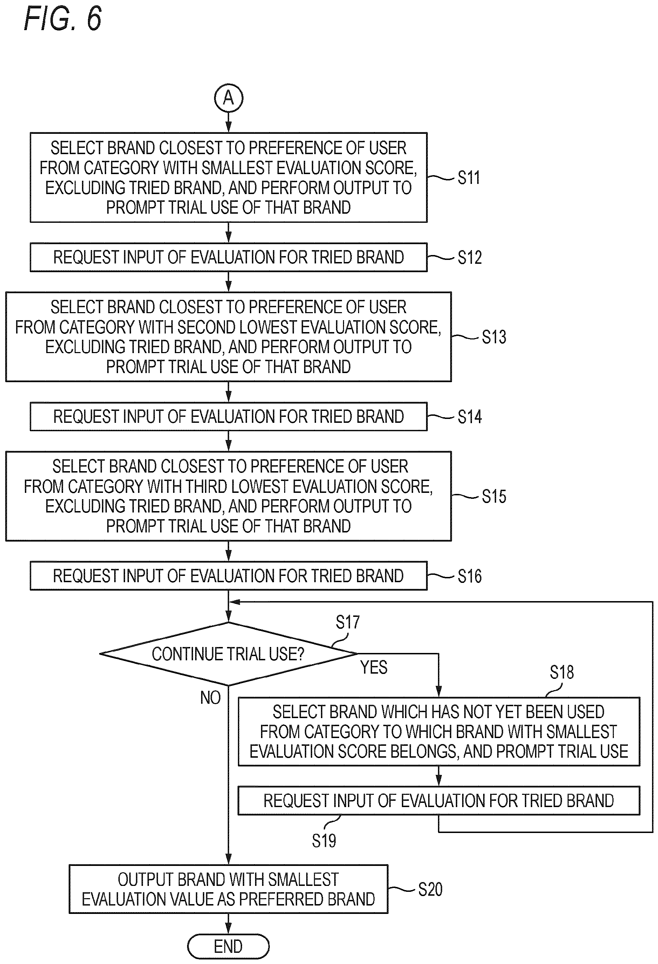

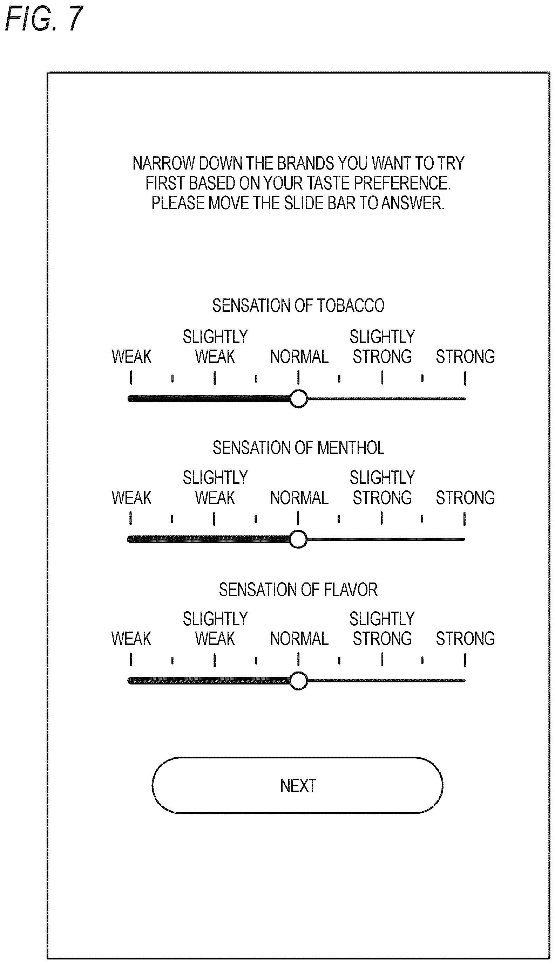

FIGS. 5 and 6 are flowcharts for illustrating an operation of the processor of the electronic device 30. Each of FIGS. 7, 8, and 9 is a diagram showing an example of a screen displayed on the display device of the electronic device 30.

The processor of the electronic device 30 first requests input of information for specifying the smoke flavor of the aerosol former 11 preferred by the user (information indicating a preference of the user) (step S 1). The processor of the electronic device 30 prompts the user to input the information by displaying, for example, the screen shown in FIG. 7 on the display device.

The screen shown in FIG. 7 displays three items: the sensation of tobacco, the sensation of menthol, and the sensation of flavor, and each item is displayed with a slide bar indicated by a thick line and whose right end can be moved left or right, and a scale. The scale includes a scale corresponding to an evaluation value of "1" (weak), a scale corresponding to an evaluation value of "3" (slightly weak), a scale between "weak" and "slightly weak", which corresponds to an evaluation value of "2", a scale (normal) corresponding to an evaluation value of "5", a scale between "slightly weak" and "normal", which corresponds to the evaluation value of "4", a scale (slightly strong) corresponding to an evaluation value of "7", a scale between "normal" and "slightly strong", which corresponds to an evaluation value of "6", a scale (strong) corresponding to an evaluation value of "9", and a scale between "slightly strong" and "strong", which corresponds to an evaluation value of "8".

The user aligns the right end of each of the five slide bars with one of the scales, and then operates a "NEXT" button. Accordingly, the evaluation value corresponding to the scale at a position on the right end of each slide bar is input to the processor of the electronic device 30. For example, if the "NEXT" button is operated in the state of the slide bar shown in FIG. 7, preference information of the user in which the evaluation value for the sensation of tobacco is set as "5", the evaluation value for the sensation of menthol is set as "5", and the evaluation value for the sensation of flavor is set as "5" is input to the processor of the electronic device 30.

The evaluation value for the sensation of tobacco included in the preference information constitutes first information indicating the intensity of the sensation of tobacco preferred by the user. The evaluation value for the sensation of menthol included in the preference information constitutes second information indicating the intensity of the sensation of menthol preferred by the user. The evaluation value for the sensation of flavor included in the preference information constitutes third information indicating the intensity of the sensation of flavor preferred by the user.

The processor of the electronic device 30 that receives input of the preference information determines ranking of the categories preferred by the user based on the preference information (step S2). Specifically, the processor of the electronic device 30 determines, in the preference information, the category corresponding to the sensation with the highest evaluation value as a first-ranked category (first category) most preferred by the user. For example, if the preference information with the highest evaluation value for the sensation of tobacco is input, the processor of electronic device 30 determines the regular category corresponding to the sensation of tobacco as the first-ranked category.

If two or more of the three evaluation values included in the preference information are highest, the processor of the electronic device 30 raises priorities of categories corresponding to the two or more evaluation values for the sensations in order of flavor, menthol, and regular, and determines the category with the higher priority as the first-ranked category most preferred by the user.

For example, if the preference information with the highest evaluation values for the sensation of tobacco and the sensation of menthol is input, the processor of the electronic device 30 determines the menthol category, which has a higher priority, as the first-ranked category, out of the regular category corresponding to the sensation of tobacco and the menthol category corresponding to the sensation of menthol, and determines the regular category as a second-ranked category (second category). The processor of the electronic device 30 determines the flavor category corresponding to the sensation of flavor with the lowest evaluation value as the third-ranked category (second category).

For example, if the preference information with the highest evaluation values for the sensation of tobacco and the sensation of flavor is input, the processor of the electronic device 30 determines the flavor category, which has a higher priority, as the first-ranked category, out of the regular category corresponding to the sensation of tobacco and the flavor category corresponding to the sensation of flavor, and determines the regular category as the second-ranked category (second category). The processor of the electronic device 30 determines the flavor category corresponding to the sensation of flavor with the lowest evaluation value as the third-ranked category (second category).

For example, when the preference information with the highest evaluation values for the sensation of menthol and the sensation of flavor is input, the processor of the electronic device 30 determines the flavor category, which has a higher priority, as the first-ranked category, out of the menthol category corresponding to the sensation of menthol and the flavor category corresponding to the sensation of flavor, and determines the menthol category as the second-ranked category (second category). The processor of the electronic device 30 determines the regular category corresponding to the sensation of tobacco with the lowest evaluation value as the third-ranked category (second category).

For example, when the preference information with the highest evaluation values for the sensation of tobacco, the sensation of menthol, and the sensation of flavor is input, the processor of the electronic device 30 determines the flavor category with the highest priority as the first-ranked category, the menthol category with the next highest priority as the second-ranked category (second category), and the regular category with the lowest priority as the third-ranked category (second category).

After the process in step S2, the processor of the electronic device 30 selects the brand closest to the preference of the user from the brands belonging to the third-ranked category which is lowest in rank in the sample set 20, and performs output to prompt the trial use of that brand (step S3).

For example, a method for selecting the brand closest to the preference of the user from a plurality of brands in a specific category is as follows. First, a sum of absolute values of differences between the three evaluation values included in the preference information and the three evaluation values of the brand included in the specific category is calculated and used as a similarity score. Then, among the brands included in the specific category, the one with the smallest calculated similarity score is selected as the brand closest to the preference of the user.

For example, it is assumed that the preference information is input in which the evaluation value for the sensation of tobacco is "8", the evaluation value for the sensation of menthol is "3", and the evaluation value for the sensation of flavor is "0". In this case, the processor of the electronic device 30 selects the brand closest to the preference of the user from the regular category in step S3. First, the processor of the electronic device 30 calculates an absolute value (= "4") of a difference between the evaluation value of "4" for the sensation of tobacco of the brand A and the evaluation value of "8" for the sensation of tobacco of the preference information, calculates an absolute value (= "3") of a difference between the evaluation value of "0" for the sensation of menthol of the brand A and the evaluation value of "3" for the sensation of menthol of the preference information, calculates an absolute value (= "0") of a difference between the evaluation value of "0" for the sensation of flavor of the brand A and the evaluation value of "0" for the sensation of flavor of the preference information, and obtains the sum (= "7") of these absolute values as the similarity score.

In addition, the processor of the electronic device 30 calculates an absolute value (= "2") of a difference between the evaluation value of "6" for the sensation of tobacco of the brand B and the evaluation value of "8" for the sensation of tobacco of the preference information, calculates an absolute value (= "3") of a difference between the evaluation value of "0" for the sensation of menthol of the brand B and the evaluation value of "3" for the sensation of menthol of the preference information, calculates an absolute value (= "0") of a difference between the evaluation value of "0" for the sensation of flavor of the brand B and the evaluation value of "0" for the sensation of flavor of the preference information, and obtains the sum (= "5") of these absolute values as the similarity score.

In addition, the processor of the electronic device 30 calculates an absolute value (= "3") of a difference between the evaluation value of "5" for the sensation of tobacco of the brand C and the evaluation value of "8" for the sensation of tobacco of the preference information, calculates an absolute value (= "3") of a difference between the evaluation value of "0" for the sensation of menthol of the brand C and the evaluation value of "3" for the sensation of menthol of the preference information, calculates an absolute value (= "0") of a difference between the evaluation value of "0" for the sensation of flavor of the brand C and the evaluation value of "0" for the sensation of flavor of the preference information, and obtains the sum (= "6") of these absolute values as the similarity score.

Then, the processor of the electronic device 30 selects the brand B with the smallest similarity score as the brand closest to the preference of the user. When there are a plurality of brands with the smallest similarity score, the more popular brand may be selected as the brand closest to the preference of the user in consideration of sales performance information of the plurality of brands.

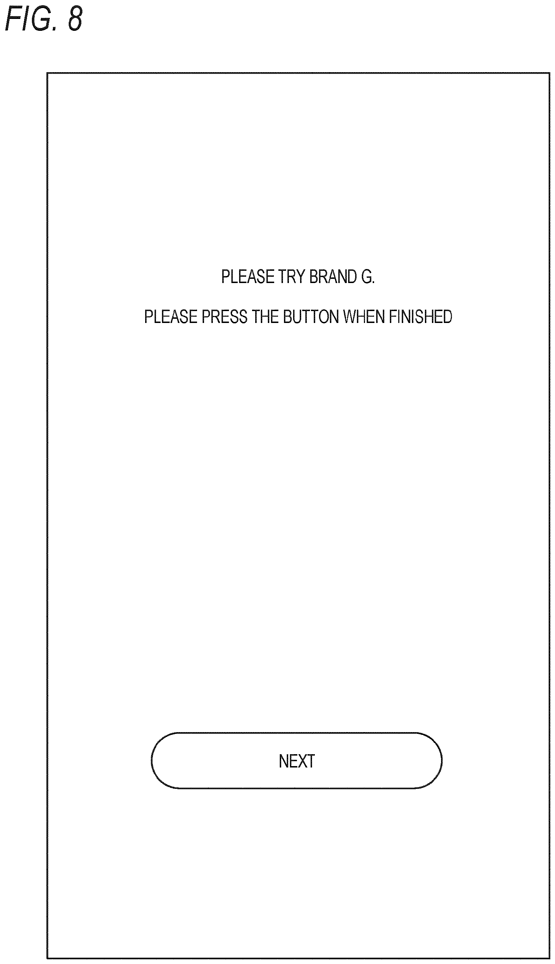

After selecting one brand from the third-ranked category, the processor of the electronic device 30 prompts the user to try the selected brand, for example, by displaying the screen shown in FIG. 8 on the display device.

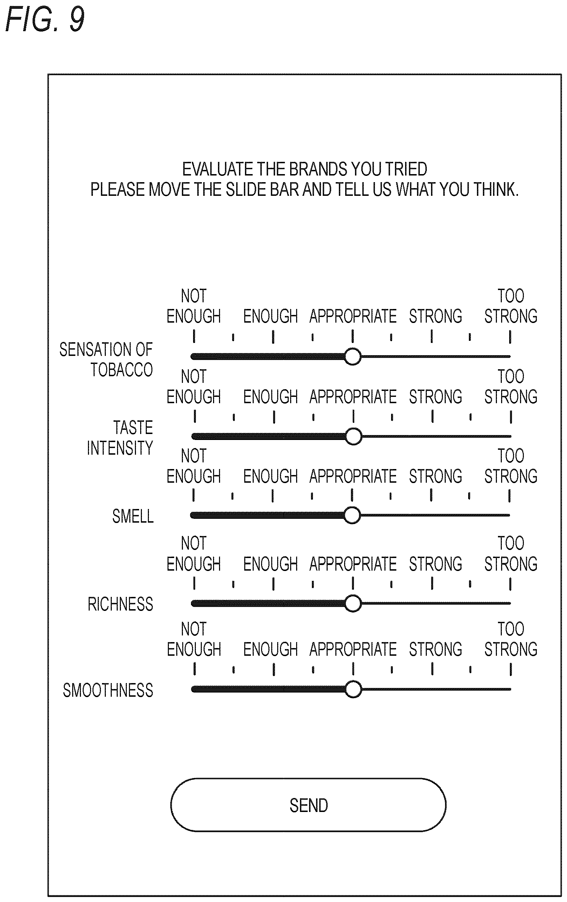

When the processor of the electronic device 30 detects a "NEXT" button operation while the screen shown in FIG. 8 is displayed, the processor of the electronic device 30 causes the display device to display the screen shown in FIG. 9, and requests the user to input an evaluation for the brand whose trial use is prompted to the user in step S3 (step S4).

The screen shown in FIG. 9 displays five evaluation items: sensation of tobacco, taste intensity, smell, richness, and smoothness. A scale and a slide bar which is indicated by a thick line and whose right end can be moved left and right, are displayed in correspondence with each evaluation item. The scale includes a scale corresponding to an evaluation value of " 1" (not enough), a scale corresponding to an evaluation value of "3" (slightly weak), a scale between "not enough" and "slightly weak", which corresponds to an evaluation value of "2", a scale (appropriate) corresponding to an evaluation value of "5", a scale between "slightly weak" and "appropriate", which corresponds to an evaluation value of "4", a scale (strong) corresponding to an evaluation value of "7", a scale between "appropriate" and "strong", which corresponds to an evaluation value of "6", a scale (too strong) corresponding to an evaluation value of "9", and a scale between "strong" and "too strong", which corresponds to an evaluation value of "8".

The user aligns the right end of each of the five slide bars shown in FIG. 9 with one of the scales, and then operates a "SEND" button. Accordingly, the evaluation value corresponding to the scale at a position on the right end of each slide bar is input to the processor of the electronic device 30. In response to receiving the input of these evaluation values, the processor of the electronic device 30 calculates a sum of absolute values of differences between the input evaluation values for the respective evaluation items and a reference value (here, "5") of the evaluation value for those evaluation items, and holds the sum as an evaluation score of the brand for which the trial use is prompted in step S3 (in other words, the brand tried by the user). For example, it is assumed that the evaluation values for the sensation of tobacco, the taste intensity, the smell, the richness, and the smoothness are 3, 3, 5, 3, and 4, respectively. In this case, the processor of the electronic device 30 sets the numerical value "7" obtained by calculating 13 - 5| + |3 - 5| + |5 - 5| + |3 - 5| + |4 - 5| as the evaluation score. The smaller the evaluation score of the brand, the closer the smoke flavor of the brand is to the preference of the user.

Although the five evaluation items are shown on the screen shown in FIG. 9, it is sufficient that at least one evaluation item is displayed on the screen. For example, when the tried brand belongs to the regular category, it is sufficient that at least the evaluation item for the sensation of tobacco is displayed. When the tried brand belongs to the menthol category, it is sufficient that at least the evaluation item for the sensation of menthol is displayed. When the tried brand belongs to the flavor category, it is sufficient that at least the evaluation item for the sensation of flavor is displayed.

As shown in FIG. 9, in addition to the evaluation items for the sensations (hereinafter, referred to as main evaluation items) that correspond to the categories of the tried brands, the screen for the user to input the evaluation may display another evaluation item (hereinafter, referred to as a sub-evaluation item) for evaluating a smoke flavor other than the sensations in the categories. When the above-described evaluation score is calculated, an evaluation value of this sub-evaluation item may be weighted lower than the evaluation value of the main evaluation item.

For example, it is assumed that the evaluation values for the sensation of tobacco (main evaluation item), the taste intensity (sub-evaluation item), the smell (sub-evaluation item), the richness (sub-evaluation item), and the smoothness (sub-evaluation item) input according to the screen shown in FIG. 9 are 3, 3, 5, 3, and 4, respectively. In this case, the processor of the electronic device 30 may calculate a numerical value "4.5" obtained by calculating |3 - 5| + (|3 - 5| + |5 - 5| + |3 - 5| + |4 - 5|) × 0.5 as the evaluation score.

After calculating and holding the evaluation score based on the evaluation value input in response to the request in step S4, the processor of the electronic device 30 selects the brand closest to the preference of the user from the brands belonging to the second-ranked category in the sample set 20, and performs output to prompt the user to try the brand (step S5). The process in step S5 is the same as the process in step S3, except that the category and brand to be selected are different. After step S5, the processor of the electronic device 30 causes the display device to display a screen corresponding to FIG. 9, and requests the user to input an evaluation for the brand whose trial use is prompted to the user in step S5 (step S6). Then, the processor of the electronic device 30 calculates and holds the evaluation score of the brand whose trial use is prompted in step S5, based on the evaluation value input in response to the request in step S6.

Next, the processor of the electronic device 30 selects the brand closest to the preference of the user from the brands belonging to the first-ranked category which is lowest in rank in the sample set 20, and performs output to prompt the trial use of that brand (step S7). The process in step S7 is the same as the process in step S3, except that the category and brand to be selected are different. After step S7, the processor of the electronic device 30 causes the display device to display a screen corresponding to FIG. 9, and requests the user to input an evaluation for the brand whose trial use is prompted to the user in step S7 (step S8). Then, the processor of the electronic device 30 calculates and holds the evaluation score of the brand whose trial use is prompted in step S7, based on the evaluation value input in response to the request in step S8.

It is assumed that the evaluation score is calculated every time the user inputs the evaluation value so far, but after the process in step S8, the processor of the electronic device 30 may collectively calculate the evaluation scores of the brands in each category tried by the user based on the evaluation values input by the user.

After step S8, the processor of the electronic device 30 determines the next brand whose trial use is prompted to the user based on the evaluation scores of the three brands calculated so far. Specifically, the processor of the electronic device 30 identifies the category to which the brand with the smallest evaluation score belongs. Then, the processor of the electronic device 30 selects the brand closest to the preference of the user from the brands belonging to that category in the sample set 20, excluding the brand whose trial use has already been prompted, and performs output to prompt the trial use of that brand (step S11).

For example, when the brand with the smallest evaluation score is the brand A, the processor of the electronic device 30 selects the brands B and C, other than the brand A whose trial use has already been prompted, as selection candidates from the brands A, B, and C belonging to the regular category. Then, the processor of the electronic device 30 sets the evaluation value for the sensation of tobacco corresponding to the regular category as a calculation reference item, calculates an absolute value of a difference between the value of the calculation reference item (evaluation value for the sensation of tobacco) included in the preference information and the value of the calculation reference item (evaluation value for the sensation of tobacco) for each of the brand B and the brand C, selects the brand with the smaller absolute value from the brands B and C, and prompts the trial use to the user. When the absolute value is the same for the brand B and the brand C, the more popular brand may be selected based on the sales performance information and the like.

After step S11, the processor of the electronic device 30 requests the user to input an evaluation for the brand whose trial use is prompted to the user in step S11 (step S12). Then, the processor of the electronic device 30 calculates and holds the evaluation score of the brand whose trial use is prompted in step S11, based on the evaluation value input in response to the request in step S12.

Next, the processor of the electronic device 30 identifies the category to which the brand with the second lowest evaluation score belongs. Then, the processor of the electronic device 30 selects the brand closest to the preference of the user from the brands belonging to that category in the sample set 20, excluding the brand whose trial use has already been prompted, and performs output to prompt the trial use of that brand (step S13).

For example, when the brand with the second lowest evaluation score is the brand D, the processor of the electronic device 30 selects the brands E and F, other than the brand D whose trial use has already been prompted, as the selection candidates from the brands D, E, and F belonging to the menthol category. Then, the processor of the electronic device 30 sets the evaluation value for the sensation of menthol corresponding to the menthol category as the calculation reference item, calculates an absolute value of a difference between the value of the calculation reference item included in the preference information and the value of the calculation reference item for each of the brand E and the brand F, selects the brand with the smaller absolute value from the brands E and F, and prompts the trial use to the user.

After step S13, the processor of the electronic device 30 requests the user to input an evaluation for the brand whose trial use is prompted to the user in step S13 (step S14). Then, the processor of the electronic device 30 calculates and holds the evaluation score of the brand whose trial use is prompted in step S13, based on the evaluation value input in response to the request in step S14.

Next, the processor of the electronic device 30 identifies the category to which the brand with the highest evaluation score belongs. Then, the processor of the electronic device 30 selects the brand closest to the preference of the user from the brands belonging to that category in the sample set 20, excluding the brand whose trial use has already been prompted, and performs output to prompt the trial use of that brand (step S 15).

For example, when the brand with the third lowest evaluation score is the brand G, the processor of the electronic device 30 selects the brands H and I, other than the brand G whose trial use has already been prompted, as selection candidates from the brands G, H, and I belonging to the flavor category. Then, the processor of the electronic device 30 sets the evaluation value for the sensation of flavor corresponding to the flavor category as the calculation reference item, calculates an absolute value of a difference between the value of the calculation reference item included in the preference information and the value of the calculation reference item for each of the brand H and the brand I, selects the brand with the smaller absolute value from the brands H and I, and prompts the trial use to the user.

After step S15, the processor of the electronic device 30 requests the user to input an evaluation for the brand whose trial use is prompted to the user in step S15 (step S16). Then, the processor of the electronic device 30 calculates and holds the evaluation score of the brand whose trial use is prompted in step S 15, based on the evaluation value input in response to the request in step S16.

Thereafter, the processor of the electronic device 30 determines whether to continue the trial use of other brands (step S17). The processor of the electronic device 30 may make the determination in step S17 by, for example, using the display device to confirm an intention of the user to continue the trial use. When one or more untried brands no longer exist in each of the three categories, the processor of the electronic device 30 may make the determination in step S 17 as NO.

If the determination in step S17 is YES, the processor of the electronic device 30 identifies the brand with the smallest evaluation score among all the evaluation scores calculated so far. Then, the processor of the electronic device 30 selects the brand closest to the preference of the user from the brands whose trial use has not yet been prompted in the category to which the identified brand belongs (brand with the smallest absolute value of the difference from the evaluation value of preference information of the sensation corresponding to that category), and performs output to prompt the trial use of that brand (step S18).

After step S18, the processor of the electronic device 30 requests the user to input an evaluation for the brand whose trial use is prompted to the user in step S 18 (step S19). Then, the processor of the electronic device 30 calculates and holds the evaluation score of the brand whose trial use is prompted in step S 18, based on the evaluation value input in response to the request in step S19. After step S18, the process returns to step S17.

When the determination in step S 17 is NO, the processor of the electronic device 30 outputs the brand with the smallest evaluation score among all the evaluation scores calculated so far as a brand most preferred by the user (step S20). In step S20, for example, the brand preferred by the user is displayed on the display device. Accordingly, the user can discover a brand that best suits the preference of his or her own from brands that have not been used by the user before.

In the flowcharts shown in FIGS. 5 and 6, the processes from step S 11 to step S 16 may be omitted, and the process of step S20 may be performed after step S8. Alternatively, in the flowcharts shown in FIGS. 5 and 6, the processes from steps S11 to S 16 may be omitted, the processes of steps S18 and S 19 may be performed after step S8, and then the process of step S20 may be performed.

As described above, according to the support system 1, the electronic device 30 performs the output to prompt the trial use of the brand in a category other than the category most preferred by the user, so that the user can obtain an opportunity to try a brand in a category that he or she does not normally select. As a result, it is possible to discover a brand in a new category that suits the preference, and aerosol inhalation experience of the user can be enriched.

Regarding at least the first three brands to be tried, the output to prompt the trial use is performed in order from the brand belonging to the category furthest from the preference of the user to the brand belonging to the category most preferred by the user. In this way, by gradually bringing the brand whose trial use is prompted closer to the brand preferred by the user, it becomes easier for the user to discover a category that is really preferred by the user.

Regarding a trial use of next three brands after the first three brands are tried, output is performed to prompt use of brands in order of brands belonging to categories close to the preference of the user based on the evaluation scores for the first three brands. In other words, when trying the six brands, the trial use is performed in sequence from brands that are far from the preference of the user to brands that are close to the preference of the user, and then is performed in sequence from brands that are close to the preference of the user to the brands that are far from the preference of the user. Accordingly, it is possible to prevent large changes in smoke flavor between brands that are continuously tried, and it becomes possible to perform more accurate evaluations for each brand. As a result, it becomes easier for the user to discover a category that is truly preferred by the user. From a viewpoint of accurately evaluating each brand, for example, at a timing when the user inputs the evaluation value in accordance with each process of step S4, step S6, step S8, step S12, step S14, step S16, and step S 19, it is preferable that the processor of the electronic device 30 performs the output to prompt the user to take a break or drink water.

In the above description, the example is shown in which the number of the categories of the aerosol formers is three, but even when the number of the categories is two or four or more, it is possible to similarly support the user in discovering a brand that suits his or her preference.

The processes shown in FIGS. 5 and 6 are assumed to be performed entirely by the processor of the electronic device 30, but a configuration may be adopted in which a processor of a server connected to the electronic device 30 via a network such as the Internet performs all or part of the processes shown in FIGS. 5 and 6. Alternatively, the processor of the server and the processor of the electronic device 30 may cooperate to perform the processes shown in FIGS. 5 and 6.

In the present description, at least the following matters are described. In parentheses, corresponding constituent components and the like in the embodiment described above are indicated, but the present invention is not limited thereto.
(1) A support method that supports a discovery of an aerosol former that suits a preference of a user of an aerosol generation device (aerosol generation device 10), the support method including:
   a first step (step S 1) of requesting input of information (preference information) for specifying a smoke flavor of the aerosol former preferred by the user;
   a second step (step S2) of determining, based on the input information, a first category (first-ranked category) that is a category most preferred by the user among a plurality of categories (regular, menthol, flavor) of aerosol formers usable with the aerosol generation device; and
   a third step (step S3, step S5) of selecting an aerosol former of a second category (second-ranked category, third-ranked category) other than the first category among the plurality of categories, and performing output to prompt a trial use of the selected aerosol former.

   According to (1), the output is performed to prompt the trial use of the aerosol former of the category other than the category most preferred by the user, so that the user can obtain an opportunity to try categories of aerosol formers that he or she does not normally select. As a result, it is possible to discover that an aerosol former of a new category suits a preference, and aerosol inhalation experience of the user can be enriched.
(2) The support method according to (1), in which
   when a plurality of aerosol formers are included in the same second category, the third step comprises preferentially selecting, from the plurality of aerosol formers, an aerosol former having a smoke flavor close to a smoke flavor specified by the information.
   According to (2), among the plurality of aerosol formers belonging to the second category, the aerosol former having the smoke flavor close to that desired by the user is preferentially selected. Therefore, the user can preferentially try an aerosol former close to his or her preference, although the category is not normally selected by the user.
(3) The support method according to (1) or (2), in which
   the plurality of categories include three or more of the categories, and
   the third step comprises selecting at least one aerosol former from each of two or more of the second categories.

   According to (3), the user can obtain an opportunity to try aerosol formers from the plurality of categories that the he or she does not normally select. As a result, it is possible to discover that an aerosol former of a new category suits a preference, and aerosol inhalation experience of the user can be enriched.
(4) The support method according to (3), further including:
   a fourth step (step S7) of selecting an aerosol former of the first category and performing output to prompt a trial use of the aerosol former.
   According to (4), the user can also obtain an opportunity to try the aerosol former of the category most preferred by the user. As a result, it becomes possible to try an aerosol former that has never been used before even though this aerosol former is in the most preferred category, and it becomes possible to make new discoveries within the preferred category.
(5) The support method according to (4), further including:
   performing the fourth step after the third step.
   According to (5), the user can try the aerosol formers belonging to the respective categories in order from the category different from the preferred category to the most preferred category. Accordingly, compared to a case where the user tries the aerosol former of the most preferred category first, it becomes easier for the user to discover the category that is really preferred by the user.
(6) The support method according to any one of (1) to (5), in which
   the information includes first information indicating an intensity of stimulation perceived when aerosol is inhaled, second information indicating an intensity of a sensation of coolness perceived when the aerosol is inhaled, and third information indicating an intensity of smell perceived when the aerosol is inhaled.
   According to (6), the user inputs the preference for the intensities of stimulation, sensation of coolness, and smell, so that the category most preferred by the user can be determined with high precision.
(7) The support method according to (6), in which
   the plurality of categories includes a first type category (regular) corresponding to the first information, a second type category (menthol) corresponding to the second information, and a third type category (flavor) corresponding to the third information,
   the aerosol former (brands A, B, C) that has a highest intensity of stimulation among the intensities of stimulation, sensation of coolness, and smell belongs to the first type category,
   the aerosol former (brands D, E, F) that has a highest intensity of the sensation of coolness among the intensities of stimulation, the sensation of coolness, and smell belongs to the second type category,
   the aerosol former (brands G, H, I) that has a highest intensity of the smell among the intensities of stimulation, sensation of coolness, and smell belongs to the third type category, and
   the second step comprises determining, as the first category, any one of the first type category, the second type category, and the third type category, which corresponds to the highest intensity among the intensity of stimulation based on the first information, the intensity of the sensation of coolness based on the second information, and the intensity of the smell based on the third information.

   According to (7), the user inputs the preference for the intensities of stimulation, sensation of coolness, and smell, so that the category most preferred by the user can be determined with high precision.
(8) The support method according to (7), in which
   when two or more intensities among the intensity of stimulation based on the first information, the intensity of the sensation of coolness based on the second information, and the intensity of the smell based on the third information are highest, the second step comprises raising priorities of categories corresponding to the two or more intensities in order of the third type category, the second type category, and the first type category, and determining a category with higher priority as the first category.
   When the aerosol generated from the aerosol former is inhaled, stimulation can be substantially felt, when an additive that produces a sensation of exhilaration is added to the aerosol former, an additional sensation of exhilaration can be achieved, and when an additive that produces the smell is further added to the aerosol former, additional unique smell can be perceived. Since the additive is added in consideration of the preference, when the user prefers a category that does not contain the additive and a category that contains the additive (for example, when the intensity of stimulation and the intensity of the sensation of coolness or smell are highest, respectively), by giving a priority to the category that contains the additive and determining that the category is preferred by the user, it is possible to accurately determine the preference of the user.
(9) A support program that supports a discovery of an aerosol former that suits a preference of a user of an aerosol generation device (aerosol generation device 10), the support program causing a processor to perform:
   a first step (step S 1) of requesting input of information for specifying a smoke flavor of the aerosol former preferred by the user;
   a second step (step S2) of determining, based on the input information, a first category (first-ranked category) that is a category most preferred by the user among a plurality of categories (regular, menthol, flavor) of aerosol formers usable with the aerosol generation device; and
   a third step (step S3, step S5) of selecting an aerosol former of a second category (second-ranked category, third-ranked category) other than the first category among the plurality of categories, and performing output to prompt a trial use of the selected aerosol former.

### REFERENCE SIGNS LIST

1: support system
10: aerosol generation device
11: aerosol former
20: sample set
30: electronic device

## Claims

1. A support method that supports a discovery of an aerosol former that suits a preference of a user of an aerosol generation device, the support method comprising:
a first step of requesting input of information for specifying a smoke flavor of the aerosol former preferred by the user;
a second step of determining, based on the input information, a first category that is a category most preferred by the user among a plurality of categories of aerosol formers usable with the aerosol generation device; and
a third step of selecting an aerosol former of a second category other than the first category among the plurality of categories, and performing output to prompt a trial use of the selected aerosol former.

2. The support method according to claim 1, wherein
when a plurality of aerosol formers are included in the same second category, the third step comprises preferentially selecting, from the plurality of aerosol formers, an aerosol former having a smoke flavor close to a smoke flavor specified by the information.

3. The support method according to claim 1 or 2, wherein
the plurality of categories include three or more of the categories, and
the third step comprises selecting at least one aerosol former from each of two or more of the second categories.

4. The support method according to claim 3, further comprising:
a fourth step of selecting an aerosol former of the first category and performing output to prompt a trial use of the aerosol former.

5. The support method according to claim 4, further comprising:
performing the fourth step after the third step.

6. The support method according to any one of claims 1 to 5, wherein
the information includes first information indicating an intensity of stimulation perceived when aerosol is inhaled, second information indicating an intensity of a sensation of coolness perceived when the aerosol is inhaled, and third information indicating an intensity of smell perceived when the aerosol is inhaled.

7. The support method according to claim 6, wherein
the plurality of categories includes a first type category corresponding to the first information, a second type category corresponding to the second information, and a third type category corresponding to the third information,
the aerosol former that has a highest intensity of stimulation among the intensities of stimulation, sensation of coolness, and smell belongs to the first type category,
the aerosol former that has a highest intensity of the sensation of coolness among the intensities of stimulation, sensation of coolness, and smell belongs to the second type category,
the aerosol former that has a highest intensity of the smell among the intensities of stimulation, sensation of coolness, and smell belongs to the third type category, and
the second step comprises determining, as the first category, any one of the first type category, the second type category, and the third type category, which corresponds to the highest intensity among the intensity of stimulation based on the first information, the intensity of the sensation of coolness based on the second information, and the intensity of the smell based on the third information.

8. The support method according to claim 7, wherein
when two or more intensities among the intensity of stimulation based on the first information, the intensity of the sensation of coolness based on the second information, and the intensity of the smell based on the third information are highest, the second step comprises raising priorities of categories corresponding to the two or more intensities in order of the third type category, the second type category, and the first type category, and determining a category with higher priority as the first category.

9. A support program that supports a discovery of an aerosol former that suits a preference of a user of an aerosol generation device, the support program causing a processor to perform:
a first step of requesting input of information for specifying a smoke flavor of the aerosol former preferred by the user;
a second step of determining, based on the input information, a first category that is a category most preferred by the user among a plurality of categories of aerosol formers usable with the aerosol generation device; and
a third step of selecting an aerosol former of a second category other than the first category among the plurality of categories, and performing output to prompt a trial use of the selected aerosol former.
